# EUROPÄISCHE PATENTSCHRIFT

(11) **EP 1 479 320 B1**
(45) Veröffentlichungstag und Bekanntmachung des Hinweises auf die Patenterteilung: **09.05.2012**
(21) Anmeldenummer: 04010267.5
(22) Anmeldetag: 30.04.2004
(51) Int. Cl.: A47B 95/04, B27D 5/00

(54) **Möbelbauplatte**
Building panel for furniture
Panneau de construction pour l'ameublement

(30) Priorität: 21.05.2003 DE 10323455
(43) Veröffentlichungstag der Anmeldung: 24.11.2004
(73) Patentinhaber: REHAU AG + Co, 95111 Rehau (DE)
(72) Erfinder: Affeldt, Jens-Uwe, 08258 Breitenfeld (DE); Krämer, Uwe, 95111 Rehau (DE)

(56) Entgegenhaltungen:
- WO-A1-93/21027
- DE-U- 20 021 797
- FR-A1- 2 739 764
- GB-A- 1 076 033
- GB-A- 2 246 701
- US-A- 2 030 730
- US-A- 4 446 179
- US-A- 5 310 435
- US-A- 5 525 384

## Beschreibung

Die Erfindung betrifft eine Möbelbauplatte, insbesondere eine Küchenarbeitsplatte gemäß dem Oberbegriff des Anspruches 1, sowie ein Verfahren zur Herstellung.

Eine gattungsgemäße Möbelbauplatte ist aus DE 200 21 797 U1 bekannt, mit einer Möbelbauplatte mit einer dünnen Nutzschicht als Arbeitsoberfläche, mit einem eine Steinoberfläche nachahmenden Dekor und einem Umleimer vor mindestens einer Stirnseite der Grundplatte mit Nutzschicht, aus einem künstlich erzeugten Steinmaterial.

Aus der WO 93121027 A1 ist eine Arbeitsplatte mit einer flexiblen Kante bekannt, wobei die flexible Kante an einer Stirnseite bündig mit den Ober- und Unterseiten der Platte angeordnet ist.

Aus der DE 298 02 242 U1 ist eine Möbelbauplatte bekannt, insbesondere Küchenarbeitsplatte, aus einer Grundplatte mit einer dünnen oberen Deckschicht, insbesondere aus melaminharzgetränktem Papierlaminat und mit einem Umleimer an den Stirnseiten. Diese Möbelbauplatte ist dadurch gekennzeichnet, dass die Grundplatte im Bereich einer Stirnseite unterhalb der Deckschicht eine Hinterfräsung aufweist, die Deckschicht stegartig freigestellt ist und der Umleimer mit seiner Oberseite unmittelbar unterhalb des überstehenden Steges der Deckschicht an diese angrenzend angeordnet ist. Diese Möbelbauplatte weist in der formgefrästen Hinterfräsung nutartige Ausnehmungen auf die für von der Rückseite des Umleimers vorstehende feder- oder stegartige Fortsätze vorgesehen sind.

Die FR-A-2 739 764 betrifft eine Tischplatte und ein Verfahren zur Befestigung eines Profils an der Stirnseite dieser Platte. Dabei wird die Kante der Tischplatte mit einem Profil aus synthetischem Material abgedeckt. Der Querschnitt dieses Profils ist im Wesentlichen U-förmig, wobei das Profil einen flachen Streifen aufweist, welcher im Wesentlichen der Dicke der Kante entspricht. Zwei verhältnismäßig weiche und biegsame Lippen erstrecken sich von den längsseitigen Kanten des Streifens und legen sich auf die oberen und unteren Oberflächen der Tischplatte. Zwei innere und längsseitig verlaufende Hohlräume auf jeder Seite des Streifens werden durch Nuten verlängert, die sich am Umfang des Streifens befinden. Klebstoff wird in diese Hohlräume eingebracht, um das Profil an der Tischplatte zu befestigen.

Die US-A-5 310 435 offenbart eine Arbeitsplatte mit einem Laminat oder Furnier auf einer horizontalen Fläche und einem Laminat oder Furnier auf einer vertikalen Fläche, wobei ein erstes Eckelement eine bogenförmige Oberfläche aufweist, die bündig in sowohl die horizontale Oberfläche der Arbeitsplatte als auch eine vertikale Oberfläche des Furniers übergeht. Die Arbeitsplatte wird gefertigt, in dem die vertikale Fläche der Platte unvollendet bleibt und der vertikale Furnierstreifen an einem Eckteil angeordnet wird, welches dann an der Kante der Platte angebracht wird. Das Eckteil ist aus einem Blockkörper gefertigt, wobei der vertikale Furnierstreifen an einer der Seiten davon angebracht ist. Nuten werden sowohl oben als unten auf dieser Seite des Blockteils angebracht und Streifen mit rechteckigem Querschnitt, aus welchem die Eckelemente geformt werden, werden in die Nuten eingeklebt. Diese Streifen werden dann bearbeitet, um die weich übergehenden, bogenförmigen Oberflächen zu bilden, die bündig in den Laminatstreifen übergehen. Die Rückseite des Blockteils und die oberseitige Kante des oberen Streifens werden dann bearbeitet, um das Endstück zu bilden, welches mit der Arbeitsplatte zusammenpasst.

Die US-A-5 525 384 beschreibt ein flexibles Dekorprofil, welches aus einem Kunststoff hergestellt ist, welches über einen Rastfuß mit Rastnasen in einer Nut der Stirnseite der Möbelbauplatte kraftschlüssig einbringbar ist. Das Dekorprofil weist an seiner Oberseite Nuten auf, in die ein flexibler Streifen kraft- bzw. formschlüssig einbringbar ist. Der flexible Streifen kann dabei in verschiedenen Farben ausgebildet sein und so einen unterschiedlichen optischen Gesamteindruck der Möbelbauplatte hervorrufen. Dar flexible Streifen kann weiterhin verschiedene äußere Formen aufweisen und wird durch Krafteinwirkung, bspw. mit einem Gummihammer, in eine Nut an der Oberseite des Dekorprofils eingebracht.

Nachteilig bei diesem vorbekannten Stand der Technik sind zum einen die material- und zeitintensiven Bearbeitungsschritte für die Herstellung der Hinterfräsung in der Grundplatte, wobei es hier zu Beschädigungen der Dekorschicht der Möbelbauplatte kommt. Ein weiterer Nachteil wird darin gesehen, dass die zusätzlich mit einem gleich hohen materiellen bzw. zeitlichem Aufwand in die Grundplatte der Möbelbauplatte einbringbaren nutartigen Ausnehmungen sowohl von ihrer eigentlichen Dimensionierung her als auch von ihrer Position zur Grundplatte bzw. zur Dekorschicht der Möbelbauplatte exakt angeordnet sein müssen, damit die Umleimer passgerecht an die entsprechenden Stirnseiten der Möbelbauplatte anbringbar sind. Hierbei besteht die Gefahr, dass beim Anbringen der Umleimer an die Grundplatte die Dekorschicht der Möbelbauplatte beschädigt sogar abgetrennt wird.

Ein weiterer Nachteil wird darin gesehen, dass die vorstehenden feder- oder stegartigen Fortsätze der Umleimer und die nutartigen Ausnehmungen der Grundplatte mit einem Klebstoffsystem versehen werden müssen um eine möglichst stoffschlossige Verbindung zu realisieren.

Neben den hohen Kosten bedingt durch die vielen Verarbeitungsschritte und den hohen zeitlichen Aufwand, die beim Anbringen derartiger Umleimer an die Möbelbauplatte verbunden sind, entspricht auch der realisierte optische Gesamteindruck einer solchen Möbelbauplatte nicht den Anforderungen der Designer und Endkunden.

Es ist die Aufgabe der vorliegenden Erfindung, eine Möbelbauplatte zur Verfügung zu stellen, die die vorgenannten Nachteile des Standes der Technik überwinden, deren Herstellung vereinfacht und automatisierbar möglich ist, die kostengünstig und wirtschaftlich herstellbar ist und deren optischer Gesamteindruck optimiert ist.

Die Aufgabe der Erfindung wird in Verbindung mit den Merkmalen des Oberbegriffes erfindungsgemäß durch die kennzeichnenden Merkmale des Anspruches 1 und des Anspruches 16 gelöst.

Erfindungsgemäss weist das Dekorprofil auf seiner der Stirnseite der Möbelbauplatte abgewandten Seite wenigstens ein Element und ein zu diesem versetzt angeordnetes Element auf und an dem versetzt angeordneten Element ist wenigstens teilweise ein Dekorelement angeordnet. Durch diese Gestaltung der erfindungsgemäßen Möbelbauplatte ist es möglich die Möbelbauplatte kosten günstig herzustellen und automatisiert an die Stirnseiten das Dekorprofil anzubringen.

Das Dekorelement ist einstückig mit dem versetzt angeordneten Element des Dekorprofiles verbunden.

Dies kann vorteilhafterweise dadurch realisiert werden, dass auf einer und / oder beiden zu verbindeneden Seiten des Dekorelementes bzw. des versetzt angeordneten Elementes des Dekorprofils ein Klebstoffsystem aufgebracht ist.
Erfindungsgemäss ist das Dekorelement aus einem metallischen Werkstoff ausgeführt, hierdurch ist es möglich, neben den Anforderungen der Designer auch das Dekorprofil an sich so zu dimensionieren, dass die geforderten mechanischen Eigenschaften durch das zusätzlich verstärkende Dekorelement aus einem metallischen Werkstoff realisierbar sind.
In einem Ausführungsbeispiel ist das Dekorelement aus Edelstahl, Aluminium, Kupfer und dergleichen ausgeführt, so dass neben den optischen Anforderungen auch die mechanischen Eigenschaften durch die Art und den Werkstoff des Dekorelementes jederzeit gestaltbar sind.
In einer weiteren vorteilhaften Ausführungsform entspricht die Dicke des Dekorelementes etwa der Dicke der Stufenkante zwischen dem versetzt angeordneten Element und dem an diesen anschließenden Element des Dekorprofiles. Somit lässt sich der optische Gesamteindruck der erfindungsgemäßen Möbelbauplatte vorteilhaft gestalten.

Es liegt aber auch im Rahmen der Erfindung, dass die Dicke des Dekorelementes kleiner und / oder größer als die Dicke der Stufenkante ist, so dass auch das Dekorelement versetzt angeordnet ist.
Es hat sich weiterhin sehr vorteilhaft erwiesen, dass das Dekorelement mit wenigstens einer seiner Stirnseiten an der Stufenkante des Dekorprofiles angeordnet ist. Weiterhin vorteilhaft wird gesehen, dass das Dekorelement mit wenigstens einer seiner Stirnseiten von der Stufenkante des Dekorprofiles beabstandet angeordnet ist. Durch diese Variationsmöglichkeiten können Schattenfugen und dergleichen durch die Designer positioniert werden, wobei gleichzeitig das Herstellungsverfahren derartiger Möbelbauplatten mit an den Stirnseiten befestigbarer Dekorprofile kostengünstig und wirtschaftlich realisierbar ist.
In einer weiteren Ausführungsform steht das Dekorelement in einem Flächenverhältnis von etwa 2 : 1 zur Fläche des nicht versetzt angeordneten Elementes des Dekorprofiles. Durch diese Anordnung kann die Einheitlichkeit der Möbelbauplatte mit ihrer Dekorschicht zu dem Dekorprofil optisch dargestellt werden, wobei das nicht versetzt angeordnete Element des Dekorprofiles in einem weiteren Ausführungsbeispiel dekorgleich zur Dekorschicht der erfindungsgemäßen Möbelbauplatte ist.
Überraschend wurde gefunden, dass bei einem Verhältnis der Dicke des nicht versetzt angeordneten Elementes des Dekorprofiles zur Dicke des Dekorelementes von wenigstens 1, die Herstellungskosten, sowie die Festigkeits- bzw. die Stabilitätseigenschaften und das Design der Möbelbauplatten mit an den Stirnseiten befestigbarer Dekorprofile optimal in Einklang gebracht werden können.
Es hat sich weiterhin als sehr vorteilhaft erwiesen, dass die Grundfarbe des versetzt angeordneten und des nicht versetzt angeordneten Elementes des Dekorprofiles der Grundfarbe der Dekorschicht der Möbelbauplatte entspricht. Dadurch kann der sogenannte Bilderrahmeneffekt verhindert werden.
Ebenso vorteilhaft erweist sich die Tatsache, dass die Stirnseite des Dekorprofiles dekorgleich zur Dekorschicht der erfindungsgemäßen Möbelbauplatte ist. In den Werkstoffen der Elemente des Dekorprofiles könne zusätzlich Füllstoffe wie beispielsweise Pigmente, Flitter und dergleichen eingebracht sein, die damit das gleiche Dekor wie die Dekorschicht der Möbelbauplatte aufweisen.

Durch das auf die Rückseite des Dekorprofiles, welche der Stirnseite der Möbelbauplatte zugeordnet ist, aufgebrachte Klebstoffsystem kann das Dekorprofil im automatisierten Betrieb kostengünstig und schnell an die Stirnseite der erfindungsgemäßen Möbelbauplatte stoffschlüssig aufgebracht werden.
Es hat sich überraschend gezeigt, dass das Verhältnis der thermischen Ausdehnungskoeffizienten des Dekorelementes zu dem des versetzt angeordneten Elementes des Dekorprofiles wenigstens 10 ist, da hierdurch vorteilhafterweise zum einen die geforderte Stabilität und Festigkeit des an die erfindungsgemäße Möbelbauplatte angeordneten Dekorprofiles realisierbar ist, andererseits aber auch verschieden große bzw. kleine Biegeradien, welche beispielsweise bei abgerundeten Möbelbauplatten erforderlich sind, entsprechend kostengünstig umsetzbar sind.
Das Verfahren zur Herstellung einer Möbelbauplatte mit Dekorprofil, insbesondere Küchenarbeitsplatte ist gekennzeichnet durch die folgenden Schritte:
- Extrusion der Elemente des Dekorprofiles
- Zuführung des Dekorelementes
- Stoffschlüssiges Verbinden des Dekorelementes mit dem Element des Dekorprofils, wobei das Element eine Temperatur oberhalb seiner Erweichungstemperatur aufweist.
- Abkühlen des mit dem Dekorelement stoffschlüssig verbundenen Elementes des Dekorprofiles.
- Aufbringen einer Dekorschicht auf dem Element des Dekorprofiles.
- Abtrocknen und Aufwickeln des Dekorprofiles.
- Anbringen des Dekorprofils an die Stirnseite der Möbelbauplatte.
Bei dem Verfahren kann dass das Dekorelement zur Schaffung einer stoffschlüssigen Verbindung vor dem Zuführen erhitzt werden. Auf das Dekorelement wird vorteilhafterweise an seiner den Elementen des Dekorprofils zugewandten Seite wenigstens teilweise ein Klebstoffsystem aufgebracht. Es liegt jedoch auch im Rahmen der Erfindung, dass auf die dem Dekorelement zugeordneten Seite der Elementes des Dekorprofils wenigstens teilweise ein Klebstoffsystem aufgebracht wird.
Weiterhin vorteilhaft wird gesehen, dass auf die Oberseite und / oder die Unterseite des Dekorelementes bzw. dass auf die Oberseite und / oder die Unterseite der Elemente des Dekorprofils eine Prägung aufgebracht wird.
Mit dem erfindungsgemäßen Verfahren ist möglich, dass das Dekorelement in das Extrusionswerkzeug bzw. nach dem Extrusionswerkzeug zugeführt wird.

Nachfolgend soll der Gegenstand der Erfindung an weiteren vorteilhaften Ausführungsformen beschrieben werden, die jedoch den Gegenstand der Erfindung nicht einschränken.
Es zeigen:
- Fig. 1: eine Möbelbauplatte mit einem Dekorprofil
- Fig. 2: eine Möbelbauplatte mit einem Dekorprofil
- Fig. 3: eine Möbelbauplatte mit einem Dekorprofil

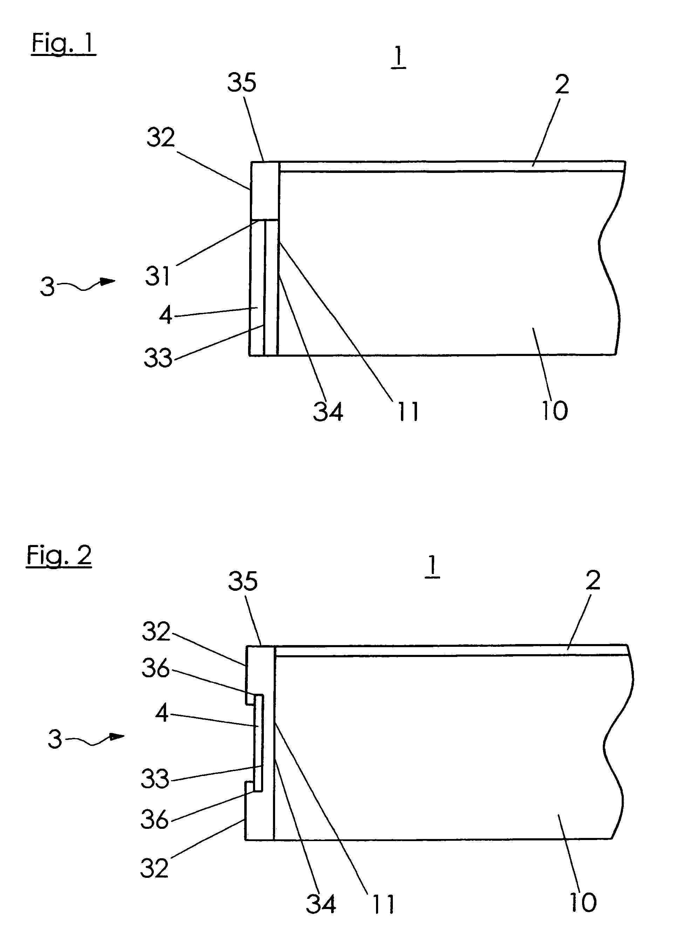

Figur 1 zeigt eine erfindungsgemäße Möbelbauplatte 1, welche aus einer Grundplatte 10 mit einer oberen Dekorschicht 2 besteht. Das Dekorprofil 3 welches an der Stirnseite 11 der Möbelbauplatte 1 angeordnet ist, weist auf seiner der Stirnseite 11 der Möbelbauplatte 1 abgewandten Seite wenigstens ein Element 32 und ein zu diesem versetzt angeordnetes Element 33 auf. Auf dem versetzt angeordneten Element 33 des Dekorprofiles 3 ist das Dekorelement 4 aufgebracht. In diesem Ausführungsbeispiel wurde an die Stirnseite 11 der erfindungsgemäßen Möbelbauplatte 1 nach dem Aufbringen der Dekorschicht 2 auf die Grundplatte 10 das Dekorprofil 3 aufgebracht. Die Elemente 32, 33 des Dekorprofiles 3 werden durch das Extrusionsverfahren hergestellt, wobei in diesem Ausführungsbeispiel das versetzt angeordnete Element 33 aus einem recycelten Werkstoff und das Element 32 des Dekorprofiles 3 aus einem hochwertigem Werkstoff bspw. im Koextrusionsverfahren hergestellt werden. Das Dekorelement 4 wurde auf eine Temperatur oberhalb der Aktivierungstemperatur der auf seiner dem versetzt angeordneten Element 33 des Dekorelementes 4 gegenüberliegenden Seite angebrachten Klebstoffschicht erhitzt. Das Zuführen des Dekorelementes 4 erfolgt nach dem Extrusionswerkzeug. Nach dem Zuführen des Dekorelementes 4 erfolgte eine stoffschlüssige Verbindung zwischen dem erhitzten Dekorelement 4 und dem versetzt angeordneten Element 33 des Dekorprofiles 3, wobei in einem weiteren Verfahrensschritt auf die Stirnseite 35 und das der Stirnseite 11 der Möbelbauplatte 1 gegenüberliegende Element 32 des Dekorprofiles 3 eine Dekorschicht aufgebracht, welche dekorgleich zur Dekorschicht 2 der Möbelbauplatte 1 ist.

Auf die Rückseite 34 des Dekorelementes 3, welche der Stirnfläche 11 der Möbelbauplatte 1 gegenüberliegend angeordnet ist, wurde ein Klebstoffsystem aufgebracht, so dass das Dekorprofil 3 stoffschlüssig mit der Möbelbauplatte 1 verbindbar ist.
In diesem Ausführungsbeispiel entspricht die Dicke des Dekorelementes 4 etwa der Dicke der Stufenkante 31 des Dekorprofiles 3. Das Dekorelement 4 ist mit einer seiner Stirnseiten an der Stufenkante 31 des Dekorprofiles 3 angeordnet.

In Figur 2 ist eine nicht erfindungsgemäßeMöbelbauplatte 1 dargestellt, wobei diese ebenfalls aus einer Grundplatte 10 und einer oberen Dekorschicht 2 aufgebaut ist. An der Stirnseite 11 der Möbelbauplatte 1 ist ein Dekorprofil 3 angeordnet, welches das versetzt angeordnete Element 33 aufweist und zwei Elemente 32. Die Elemente 32 weisen an ihren gegenüberliegenden Stirnseiten nutartige Ausnehmungen 36 auf, in die ein Dekorelement 4 lösbar mit dem Dekorprofil 3 verbindbar ist. Das Dekorelement 4 in diesem Ausführungsbeispiel ist als metallische Folie aus beispielsweise Aluminium ausgeführt, wobei das Verhältnis der Dicke des Elementes 32 des Dekorprofiles 3 zur Dicke des Dekorelementes 4 in diesem Ausführungsbeispiel etwa 7 ist. Das Dekorelement 4 ist zu den Elementen 32 versetzt angeordnet. Die Stirnseite 35 des Dekorprofiles 3 ist nicht dekorgleich zur Dekorschicht 2 der Möbelbauplatte 1 ausgeführt, wobei die Grundfarbe des Elementes 32 des Dekorprofiles 3 in diesem Ausführungsbeispiel der Grundfarbe der Dekorschicht 2 der Möbelbauplatte 1 entspricht.

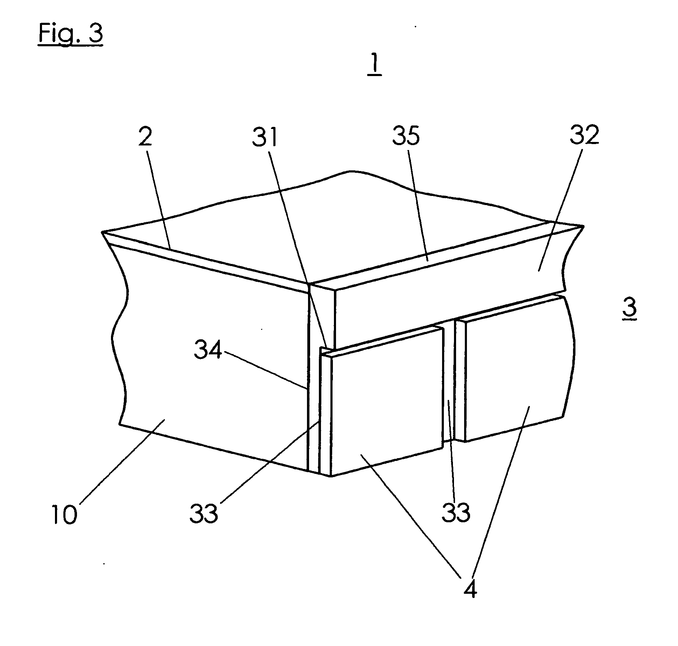

In Figur 3 ist eine weitere Ausführungsform der erfindungsgemäßen Möbelbauplatte 1 dargestellt, wobei diese aus einer Grundplatte 10 und einer oberen Dekorschicht 2 aufgebaut ist. An der Stirnseite 11 der Möbelbauplatte 1 ist ein Dekorprofil 3 angeordnet, welches ein Element 32 und ein zu diesem versetzt angeordnetes Element 33 aufweist. An der der Stirnseite 35 des Dekorprofiles 3 gegenüberliegenden Stufenkante 31 sind wenigstens teilweise Dekorelemente 4 angeordnet. In diesem Ausführungsbeispiel sind die Dekorelemente 4 sowohl zur Stufenkante 31 des Dekorprofiles 3 als auch zu sich selbst beabstandet angeordnet, so dass zwischen den Dekorelementen 4 das versetzt angeordnete Element 33 des Dekorprofiles 3 sichtbar ist. Auf der Rückseite 34 des Dekorprofiles 3 ist ein Klebstoffsystem aufgebracht, durch welches eine einstückige Verbindung zu der Möbelbauplatte 1 realisierbar ist.

Das Dekorprofil 3 wird durch eine gleichzeitige Extrusion des Elementes 32 und dem zu diesem versetzt angeordneten Element 33 hergestellt, wobei auf die Stirnfläche 35 und die der Rückseite 34 des Dekorprofiles 3 gegenüberliegende Seite des Elementes 32 eine Dekorbeschichtung aufgebracht wird. In einem weiteren Verfahrensschritt werden die Dekorelemente 4 automatisiert auf eine Temperatur oberhalb der Aktivierungstemperatur der auf der Rückseite der Dekorelemente 4 aufgebrachten Klebstoffschicht erhitzt und auf dem zurückgesetzten Element 33 des Dekorprofiles 3 stoffschlüssig aufgebracht. Danach wird das Dekorpfofil 3 an die Stirnseite 11 der Möbelbauplatte 1 aufgebracht.

## Patentansprüche

1. Möbelbauplatte (1), insbesondere Küchenarbeitsplatte, aus einer Grundplatte (10) mit einer oberen Dekorschicht (2) und einem Dekorprofil (3), das mit seiner ebenen Rückseite (34) stoffschlüssig an den Stirnseiten (11) der Möbelbauplatte (1) angebracht ist, wobei das Dekorprofil (3) mit einer Oberseite und mit einer Unterseite der Möbelbauplatte (1) bündig abschließt und auf seiner der Stirnseite (11) der Möbelbauplatte (1) abgewandten Seite wenigstens ein Element (32) und ein zu diesem versetzt angeordnetes Element (33) aufweist, **dadurch gekennzeichnet, dass** auf wenigstens einem dieser Elemente (32, 33) wenigstens teilweise ein Dekorelement (4) angeordnet ist, dass das Dekorelement (4) einstückig mit dem Element (33) des Dekorprofils (3) verbunden ist, wobei das Dekorelement (4) aus einem metallischem Werkstoff ausgeführt ist.

2. Möbelbauplatte nach Anspruch 1, **dadurch gekennzeichnet, dass** das Dekorelement (4) aus Edelstahl, Aluminium, Kupfer und dergleichen ausgeführt ist.

3. Möbelbauplatte nach einem der vorhergehenden Ansprüche, **dadurch gekennzeichnet, dass** das Dekorelement (4) als Metallfolie ausgeführt ist.

4. Möbelbauplatte nach einem der vorhergehenden Ansprüche, **dadurch gekennzeichnet, dass** das Dekorelement (4) mit wenigstens einer seiner Stirnseiten an der Stufenkante (31) des Dekorprofiles (3) angeordnet ist.

5. Möbelbauplatte nach einem der vorhergehenden Ansprüche, **dadurch gekennzeichnet, dass** das Dekorelement (4) mit wenigstens einer seiner Stirnseiten von der Stufenkante (31) des Dekorprofiles (3) beabstandet angeordnet ist.

6. Möbelbauplatte nach einem der vorhergehenden Ansprüche, **dadurch gekennzeichnet, dass** die Dicke des Dekorelementes (4) etwa der Dicke einer Stufenkante (31) des Dekorprofiles (3) entspricht.

7. Möbelbauplatte nach einem der vorhergehenden Ansprüche, **dadurch gekennzeichnet, dass** die Dicke des Dekorelementes (4) kleiner als die Dicke der Stufenkante (31) des Dekorprofiles (3) ist.

8. Möbelbauplatte nach einem der vorhergehenden Ansprüche, **dadurch gekennzeichnet, dass** die Dicke des Dekorelementes (4) größer als die Dicke der Stufenkante (31) des Dekorprofiles (3) ist.

9. Möbelbauplatte nach einem der vorhergehenden Ansprüche, **dadurch gekennzeichnet, dass** das Dekorelement (4) in einem Flächenverhältnis von etwa 2 : 1 zur Fläche des Elementes (32) des Dekorprofiles (3) steht.

10. Möbelbauplatte nach einem der vorhergehenden Ansprüche, **dadurch gekennzeichnet, dass** das Verhältnis der Dicke des Elementes (32) des Dekorprofiles (3) zur Dicke des Dekorelementes (4) wenigstens 1 ist.

11. Möbelbauplatte nach einem der vorhergehenden Ansprüche, **dadurch gekennzeichnet, dass** das Element (32) des Dekorprofiles (3) dekorgleich zur Dekorschicht (2) der Möbelbauplatte (1) ist.

12. Möbelbauplatte nach einem der vorhergehenden Ansprüche, **dadurch gekennzeichnet, dass** die Grundfarbe des Elementes (32, 33) des Dekorprofiles (3) der Grundfarbe der Dekorschicht (2) der Möbelbauplatte (1) entspricht.

13. Möbelbauplatte nach einem der vorhergehenden Ansprüche, **dadurch gekennzeichnet, dass** die Stirnseite (35) des Dekorprofiles (3) dekorgleich zur Dekorschicht (2) der Möbelbauplatte (1) ist.

14. Möbelbauplatte nach einem der vorhergehenden Ansprüche, **dadurch gekennzeichnet, dass** die der Stirnseite (11) der Möbelbauplatte (1) zugewandte Rückseite (34) des Dekorprofiles (3) wenigstens teilweise ein Klebstoffsystem aufweist.

15. Möbelbauplatte nach einem der vorhergehenden Ansprüche, **dadurch gekennzeichnet, dass** das Verhältnis der thermischen Ausdehnungskoeffizienten des Dekorelementes (4) zu dem des Elementes (32, 33) des Dekorprofiles (3) wenigstens 10 ist.

16. Verfahren zur Herstellung einer Möbelbauplatte mit Dekorprofil, insbesondere Küchenarbeitsplatte, **gekennzeichnet durch** die folgenden Schritte:
• Extrusion der Elemente (32, 33),
• Zuführung des Dekorelementes (4),
• Verbinden des Dekorelementes (4) mit dem Element (32, 33) des Dekorprofils (3), wobei das Element (32, 33) eine Temperatur oberhalb seiner Erweichungstemperatur aufweist,
• Abkühlen des mit dem Dekorelement (4) verbundenen Elementes (32, 33) des Dekorprofiles (3),
• Aufbringen einer Dekorschicht auf dem Element (32, 33) des Dekorprofiles (3),
• Abtrocknen und Aufwickeln des Dekorprofiles (3),
• Anbringen des Dekorprofils (3) an die Stirnseite (11) der Möbelbauplatte (1).

17. Verfahren nach Anspruch 16, **dadurch gekennzeichnet, dass** das Dekorelement (4) vor dem Zuführen erhitzt wird.

18. Verfahren nach Anspruch 16, **dadurch gekennzeichnet, dass** auf das Dekorelement (4) an seiner dem Element (32, 33) des Dekorprofils (3) zugewandten Seite wenigstens teilweise ein Klebstoffsystem aufgebracht wird.

19. Verfahren nach Anspruch 16, **dadurch gekennzeichnet, dass** auf die dem Dekorelement (4) zugeordnete Seite des Elementes (32, 33) des Dekorprofils (3) wenigstens teilweise ein Klebstoffsystem aufgebracht wird.

20. Verfahren nach einem der Ansprüche 16 bis 19, **dadurch gekennzeichnet, dass** das Dekorelement (4) auf eine Temperatur oberhalb der Aktivierungstemperatur des Klebstoffsystems erhitzt wird.

21. Verfahren nach einem der Ansprüche 16 bis 20, **dadurch gekennzeichnet, dass** das Dekorelement (4) in das Extrusionswerkzeug zugeführt wird.

22. Verfahren nach einem der Ansprüche 16 bis 21, **dadurch gekennzeichnet, dass** das Dekorelement (4) nach dem Extrusionswerkzeug zugeführt wird.

## Claims

1. Furniture panel (1), in particular kitchen worktop, composed of a base panel (10) having an upper decorative layer (2) and a decorative profile (3), the flat rear side (34) of which is attached cohesively to the end sides (11) of the furniture panel (1), wherein the decorative profile (3) terminates flush with a top side and with an underside of the furniture panel (1) and, on its side facing away from the end side (11) of the furniture panel (1), has at least one element (32) and an element (33) arranged in a manner offset with respect thereto, **characterized in that** a decorative element (4) is arranged at least partially on at least one of these elements (32, 33), and **in that** the decorative element (4) is connected integrally to the element (33) of the decorative profile (3), wherein the decorative element (4) is composed of a metallic material.

2. Furniture panel according to Claim 1, **characterized in that** the decorative element (4) is composed of stainless steel, aluminium, copper and the like.

3. Furniture panel according to either of the preceding claims, **characterized in that** the decorative element (4) is configured as a metal foil.

4. Furniture panel according to one of the preceding claims, **characterized in that** at least one of the end sides of the decorative element (4) is arranged at the stepped edge (31) of the decorative profile (3).

5. Furniture panel according to one of the preceding claims, **characterized in that** at least one of the end sides of the decorative element (4) is arranged in a manner spaced apart from the stepped edge (31) of the decorative profile (3).

6. Furniture panel according to one of the preceding claims, **characterized in that** the thickness of the decorative element (4) corresponds approximately to the thickness of a stepped edge (31) of the decorative profile (3).

7. Furniture panel according to one of the preceding claims, **characterized in that** the thickness of the decorative element (4) is less than the thickness of the stepped edge (31) of the decorative profile (3).

8. Furniture panel according to one of the preceding claims, **characterized in that** the thickness of the decorative element (4) is greater than the thickness of the stepped edge (31) of the decorative profile (3).

9. Furniture panel according to one of the preceding claims, **characterized in that** the decorative element (4) is in an area ratio of approximately 2:1 to the area of the element (32) of the decorative profile (3).

10. Furniture panel according to one of the preceding claims, **characterized in that** the ratio of the thickness of the element (32) of the decorative profile (3) to the thickness of the decorative element (4) is at least 1.

11. Furniture panel according to one of the preceding claims, **characterized in that** the element (32) of the decorative profile (3) has the same decoration as the decorative layer (2) of the furniture panel (1).

12. Furniture panel according to one of the preceding claims, **characterized in that** the basic colour of the element (32, 33) of the decorative profile (3) corresponds to the basic colour of the decorative layer (2) of the furniture panel (1).

13. Furniture panel according to one of the preceding claims, **characterized in that** the end side (35) of the decorative profile (3) has the same decoration as the decorative layer (2) of the furniture panel (1).

14. Furniture panel according to one of the preceding claims, **characterized in that** at least parts of the rear side (34), facing the end side (11) of the furniture panel (1), of the decorative profile (3) have an adhesive system.

15. Furniture panel according to one of the preceding claims, **characterized in that** the ratio of the coefficient of thermal expansion of the decorative element (4) to that of the element (32, 33) of the decorative profile (3) is at least 10.

16. Method for producing a furniture panel having a decorative profile, in particular a kitchen worktop, **characterized by** the following steps of:
- extruding the elements (32, 33),
- supplying the decorative element (4),
- connecting the decorative element (4) to the element (32, 33) of the decorative profile (3), wherein the element (32, 33) is at a temperature above its softening temperature,
- cooling that element (32, 33) of the decorative profile (3) which is connected to the decorative element (4),
- attaching a decorative layer to the element (32, 33) of the decorative profile (3),
- drying and winding up the decorative profile (3),
- attaching the decorative profile (3) to the end side (11) of the furniture panel (1).

17. Method according to Claim 16, **characterized in that** the decorative element (4) is heated before it is supplied.

18. Method according to Claim 16, **characterized in that** an adhesive system is attached to at least parts of that side of the decorative element (4) which faces the element (32, 33) of the decorative profile (3).

19. Method according to Claim 16, **characterized in that** an adhesive system is attached to at least parts of that side of the element (32, 33) of the decorative profile (3) which is assigned to the decorative element (4).

20. Method according to one of Claims 16 to 19, **characterized in that** the decorative element (4) is heated to a temperature above the activation temperature of the adhesive system.

21. Method according to one of Claims 16 to 20, **characterized in that** the decorative element (4) is supplied into the extrusion die.

22. Method according to one of Claims 16 to 21, **characterized in that** the decorative element (4) is supplied after the extrusion die.

## Revendications

1. Panneau de construction pour ameublement (1), en particulier plan de travail de cuisine, constitué d'un panneau de base (10) avec une couche décorative supérieure (2) et un profilé décoratif (3), qui est monté avec son côté arrière plan (34) par engagement par liaison de matière avec les côtés frontaux (11) du panneau de construction pour ameublement (1), le profilé décoratif (3) se terminant en affleurement avec un côté supérieur et un côté inférieur du panneau de construction pour ameublement (1) et présentant sur son côté opposé au côté frontal (11) du panneau de construction pour ameublement (1) au moins un élément (32) et un élément (33) disposé de manière décalée par rapport à celui-ci, **caractérisé en ce que** sur au moins l'un de ces éléments (32, 33) est disposé au moins en partie un élément décoratif (4), **en ce que** l'élément décoratif (4) est connecté d'une seule pièce à l'élément (33) du profilé décoratif (3), l'élément décoratif (4) étant réalisé en un matériau métallique.

2. Panneau de construction pour ameublement selon la revendication 1, **caractérisé en ce que** l'élément décoratif (4) est réalisé en acier spécial, en aluminium, en cuivre ou similaire.

3. Panneau de construction pour ameublement selon l'une quelconque des revendications précédentes, **caractérisé en ce que** l'élément décoratif (4) est réalisé sous forme de film métallique.

4. Panneau de construction pour ameublement selon l'une quelconque des revendications précédentes, **caractérisé en ce que** l'élément décoratif (4) est disposé avec au moins l'un de ses côtés frontaux sur l'arête étagée (31) du profilé décoratif (3).

5. Panneau de construction pour ameublement selon l'une quelconque des revendications précédentes, **caractérisé en ce que** l'élément décoratif (4) est disposé avec au moins l'un de ses côtés frontaux à distance de l'arête étagée (31) du profilé décoratif (3).

6. Panneau de construction pour ameublement selon l'une quelconque des revendications précédentes, **caractérisé en ce que** l'épaisseur de l'élément decorative (4) correspond approximativement à l'épaisseur d'une arête étagée (31) du profilé décoratif (3).

7. Panneau de construction pour ameublement selon l'une quelconque des revendications précédentes, **caractérisé en ce que** l'épaisseur de l'élément decorative (4) est inférieure à l'épaisseur de l'arête étagée (31) du profilé décoratif (3).

8. Panneau de construction pour ameublement selon l'une quelconque des revendications précédentes, **caractérisé en ce que** l'épaisseur de l'élément decorative (4) est supérieure à l'épaisseur de l'arête étagée (31) du profilé décoratif (3).

9. Panneau de construction pour ameublement selon l'une quelconque des revendications précédentes, **caractérisé en ce que** l'élément décoratif (4) se situe dans un rapport de surface d'environ 2:1 par rapport à la surface de l'élément (32) du profilé décoratif (3).

10. Panneau de construction pour ameublement selon l'une quelconque des revendications précédentes, **caractérisé en ce que** le rapport de l'épaisseur de l'élément (32) du profilé décoratif (3) par rapport à l'épaisseur de l'élément decorative (4) est d'au moins 1.

11. Panneau de construction pour ameublement selon l'une quelconque des revendications précédentes, **caractérisé en ce que** l'élément (32) du profilé decorative (3) a la même décoration que la couche décorative (2) du panneau de construction pour ameublement (1).

12. Panneau de construction pour ameublement selon l'une quelconque des revendications précédentes, **caractérisé en ce que** la couleur de base de l'élément (32, 33) du profilé décoratif (3) correspond à la couleur de base de la couche décorative (2) du panneau de construction pour ameublement (1).

13. Panneau de construction pour ameublement selon l'une quelconque des revendications précédentes, **caractérisé en ce que** le côté frontal (35) du profilé décoratif (3) a la même décoration que la couche décorative (2) du panneau de construction pour ameublement (1).

14. Panneau de construction pour ameublement selon l'une quelconque des revendications précédentes, **caractérisé en ce que** le côté arrière (34) du profilé décoratif (3) tourné vers le côté frontal (11) du panneau de construction pour ameublement (1) présente au moins en partie un système adhésif.

15. Panneau de construction pour ameublement selon l'une quelconque des revendications précédentes, **caractérisé en ce que** le rapport entre le coefficient de dilatation thermique de l'élément décoratif (4) et celui de l'élément (32, 33) du profilé décoratif (3) est d'au moins 10.

16. Procédé de fabrication d'un panneau de construction pour ameublement comprenant un profilé décoratif, notamment un plan de travail de cuisine, **caractérisé par** les étapes suivantes :
- extrusion des éléments (32, 33)
- apport de l'élément décoratif (4),
- connexion de l'élément décoratif (4) à l'élément (32, 33) du profilé décorative (3), l'élément (32, 33) présentant une température au-dessus de sa température de ramollissement,
- refroidissement de l'élément (32, 33) connecté à l'élément décoratif (4) du profilé décoratif (3),
- application d'une couche décorative sur l'élément (32, 33) du profilé decorative (3),
- séchage et enroulement du profilé décoratif (3),
- application du profilé décoratif (3) sur le côté frontal (11) du panneau de construction pour ameublement (1).

17. Procédé selon la revendication 16, **caractérisé en ce que** l'élément décoratif (4) est chauffé avant d'être apporté.

18. Procédé selon la revendication 16, **caractérisé en ce qu'**un système adhésif est appliqué au moins en partie sur l'élément décoratif (4) sur le côté tourné vers l'élément (32, 33) du profilé décoratif (3).

19. Procédé selon la revendication 16, **caractérisé en ce qu'**un système adhésif est appliqué au moins en partie sur le côté de l'élément (32, 33) du profilé décoratif (3) associé à l'élément décoratif (4).

20. Procédé selon l'une quelconque des revendications 16 à 19, **caractérisé en ce que** l'élément décoratif (4) est chauffé à une température au-dessus de la température d'activation du système adhésif.

21. Procédé selon l'une quelconque des revendications 16 à 20, **caractérisé en ce que** l'élément décoratif (4) est acheminé dans l'outil d'extrusion.

22. Procédé selon l'une quelconque des revendications 16 à 21, **caractérisé en ce que** l'élément décoratif (4) est acheminé après l'outil d'extrusion.
